# EUROPÄISCHE PATENTSCHRIFT

(11) **EP 2 345 776 B1**
(45) Veröffentlichungstag und Bekanntmachung des Hinweises auf die Patenterteilung: **19.12.2018**
(21) Anmeldenummer: 11000238.3
(22) Anmeldetag: 13.01.2011
(51) Int. Cl.: E04F 15/02, B32B 9/04, B32B 13/12

(54) **Bodenbelag mit integralen Steinplatten sowie Verfahren zu dessen Herstellung**
Floor lining with integrated stone plates and method for its manufacture
Revêtement de sol doté de plaques de pierre intégrales et son procédé de fabrication

(30) Priorität: 15.01.2010 DE 102010005068
(43) Veröffentlichungstag der Anmeldung: 20.07.2011
(73) Patentinhaber: Scholz, Karl-Heinz Peter, 63768 Hösbach (DE)
(72) Erfinder: Scholz, Karl-Heinz Peter, 63768 Hösbach (DE)
(74) Vertreter: Kramer Barske Schmidtchen Patentanwälte PartG mbB

(56) Entgegenhaltungen:
- EP-A1- 0 510 486
- EP-A2- 1 106 587
- WO-A1-2008/121806
- DE-A1- 3 940 102
- DE-U1-202006 013 010
- GIL L: "Cork composites: a review", MATERIALS, M D P I AG, CH, vol. 2, no. 3, 16 July 2009 (2009-07-16), pages 776-789, XP002716320, ISSN: 1996-1944, DOI: DOI:10.3390/MA2030776
- -: , Retrieved from the Internet: URL:https://www.baunetzwissen.de/glossar/k /kalibrierung-1589381 [retrieved on 2018-01-30]

## Beschreibung

Die Erfindung betrifft einen Bodenbelag, der aus wenigstens einer Steinplatte und einer an der Unterseite angeschmolzenen Tragschicht besteht, sowie ein Verfahren zu dessen Herstellung.

Es ist eine Vielzahl von Bodenbelägen bekannt, die aus schmelzbaren Ausgangmaterialien bestehen. Diese Ausgangsmaterialien liegen als Granulat, sogenannten Flakes oder auch als Pulver vor. Teilweise werden diesen Materialien andersfarbige Partikel beigemischt, damit ein Muster an der Oberfläche des Bodenbelages entsteht. Teilweise werden auch die Oberflächen der Bodenbeläge mit einer Prägeoberfläche versehen, damit ein gewünschtes Design möglich wird.

Die Herstellung von Bodenbelägen oder ähnlichen Bahnen und die Maschinen hierzu sind beispielsweise aus den Schriften DE 197 51 516 C2 und DE 10 2007 063 261 A1 bekannt. Bei dem Herstellungsprozess werden die thermoplastisch verformbaren Ausgangsmaterialien gleichmäßig auf ein unteres, umlaufendes Band gestreut. Im weiteren Produktionsablauf drückt schließlich auch ein oberes, umlaufendes Band auf das Ausgangsmaterial. In dem Spalt zwischen den beiden Bändern werden die Ausgangsmaterialien mittels einer Heizung angewärmt oder angeschmolzen und miteinander verpresst. Das Pressen erfolgt über paarweise beidseits der Bänder angeordneten Pressplatten oder aus Presswalzen. Zum Schluss erfolgt eine Kühlung der so entstandenen Bahn, die dann entweder plattenförmig abgelängt oder aufgerollt wird.

Vielfach sind auf dem Markt auch Bodenbeläge gewünscht, die aus Steinplatten bestehen. Bei diesen Steinplatten handelt es sich um Fliesen (keramische Platten) und/oder Natursteine. Diese werden dann in einem Mörtelbett verlegt. Diese Verlegung hat jedoch den Nachteil, dass sie sehr zeit- und kostenaufwendig ist. Weiterhin besteht der Nachteil, dass derartige Steinböden als fußkalt empfunden werden. Auch wenn diese Steinböden wieder entfernt werden sollen entsteht ein erheblicher Aufwand an Kosten und Schmutz.

So ist aus der DE 20 2006 013 010 U1 ist ein flexibler Bodenbelag mit einer Natursteinoberfläche bekannt. Die Natursteinoberfläche besteht aus mindestens einer Lage eines mehrlagigen Schiefer- oder Quarzitmaterials, die von einem Schieferblock abgelöst wurde. Auf der Unterseite der Schiefer- oder Quarzitlage befindet sich wiederum ein flexibles, zugfähiges Trägerschichtmaterial. Ein derartiger Bodenbelag ist allerdings nur auf einem Untergrund verklebbar.

Die EP 0 510 486 A1 zeigt einen Verbundstein als Belag für einen Gehweg, der einen Naturstein mit speziell gestalteter Unterseite mit Vertiefungen aufweist. In diese Vertiefungen soll Haftmörtel eingebracht werden, der dann das Aufbringen des Verbundsteins auf Beton ermöglicht.

Die EP 1106 587 A2 wiederum betrifft eine dünne Steinplatte und eine klebstoffgebundene Kiesschicht, das als Bindemittel Polyurethan-Zusammensetzungen hat:
Die DE 39 40 102 A1 zeigt leichtgewichtige Verbundplatten mit Oberflächen aus Naturstein. Hier sind Natursteinplatten mit < 7mm Stärke durch Auftragen eines Haftmittels, eines Klebstoffs sowie einer Haftbrücke vorbehandelt. Nach Aushärtung der Haftbrücke der Trägerplatte sowie einer Polyesterschicht auf der Natursteinplatte erfolgt ein Verbund der beiden Werkstoffe mittels Klebstoff.

Die WO 2008/121806 A1 offenbart eine Keramikplatte mit magnetischem Aufbau. Der Aufbau der Tragschicht dieser Keramikplatte umfasst ein textiles Laminat mit einem magnetischen flexiblen Schichtmaterial und einer flexiblen Oberschicht.

Die DE 199 01022 A1 offenbart ein Bodenbelagselement aus einer Fliese und einer an der Unterseite der Fliese angeordneten Trägerschicht, die aus Polykondensationskunstsoff oder Polyadditionskunststoff besteht. Die Trägerschicht besteht vorzugsweise aus PU-Schaum.

Ein weiterer Bodenbelag aus keramischen Platten ist aus der DE 197 24 296 A1 bekannt. Dieser Bodenbelag umfasst eine elektrisch leitfähige Haftbrückenschicht und eine darin eingebettete keramische Platteneinlage. Zusätzlich ist eine Netzlage aus einem elektrisch leitfähigen Material unter oder über oder in der Haftbrückenschicht angeordnet. Damit soll dieser Bodenbelag durch ein auf einer elektrischen Durchschlagsfestigkeitsmessung beruhendes Prüfungsverfahren auf Dichtigkeit überprüfbar sein. Auch hier ist also der Bodenbelag nur mit Mörtel verlegbar.

Ein aus einzelnen Platten aus mineralischem Material bestehender Bodenbelag, der auf einem Kiesbett eingeklopft werden, ist aus der DE 103 11 894 A1 bekannt.

In der DE 100 07 347 A1 ist eine aus Keramik hergestellte Kachel zur Verkleidung von aus Stahl gefertigten Kaminöfen bekannt. Die Kachel selbst enthält einen Permanentmagneten zur Befestigung am Kachelofen.

Der DE 100 04 763 A1 ist ein Verlegebett für Bodenfliesen entnehmbar. Dieses Verlegebett soll das Verlegen von üblichen Bodenfliesen erleichtern.

Eine aus mehreren Plättchen oder Fliesen bestehende Belagtafel und ein Verfahren zu ihrer Herstellung ist in der DE 1 055 218 A beschrieben. Hier sollen die Fugen zwischen den Plättchen mit einem flüssigen oder pastenförmigen Kunststoff ausgefüllt werden. Die Plättchen oder Kacheln selbst sind in bekannter Weise mit einem wasserlöslichen Klebstoff in der Werkstatt mit der Sichtfläche auf Papier geklebt.

In der DE 202 14 622 U1 ist ein Verlegesystem zur Erstellung eines Bodenbelags aus Steinfliesen beschrieben. Mit Hilfe dieses Verlegesystems soll der Belag bei Bedarf auch ohne Beschädigung der einzelnen Platten wieder entfernt werden können. Jede Steinfliese liegt in diesem Verlegesystem zumindest teilflächig mit ihrer Unterseite auf einem Randprofile mit Auflagebereichen aufweisenden Auflagerahmen auf. Der Auflagerahmen und die Fliesen können jeweils eine Einheit bilden und vorzugsweise miteinander verklebt sein. Bei einer Ausgestaltung ist zudem der Auflagerahmen an seiner Unterseite mit einer Trittschalldämmung versehen. Eine andere Ausgestaltung sieht vor, dass die Trittschalldämmung an der Plattenunterseite aufgeklebt ist. Schließlich ist aus der DE 694 08 273 T2 eine schallisolierende Membran für die Anwendung in Decken-, Boden- und Wandkonstruktionen unter Verwendung von keramischen oder Mauerwerksmaterialen bekannt. Die schalldämmende Membran besteht aus einer Trägerschicht und einer Polymerschicht in Kontakt mit der Trägerschicht. Die Trägerschicht besteht aus Polyester, Polypropylen, Polyamid, Nylon oder Glas.

Es ist eine Aufgabe der vorliegenden Erfindung einen Bodenbelag bereit zu stellen, der das Design von Steinplatten ermöglicht, ohne dass die zuvor genannten Nachteile auftreten, also insbesondere das Verlegen der Steinplatten in einem Mörtelbett nicht mehr notwendig ist, der mit dem Verlegen verbundene Zeit- und Kostenaufwand reduziert ist, die Steinplatten nicht mehr als fußkalt empfunden werden und solche Steinböden nicht mehr nur mit erheblichem Aufwand an Kosten und mit Schmutz verbunden entfernt werden können.

Diese Aufgabe wird durch einen Bodenbelag mit den Merkmalen des Anspruches 1 gelöst. Vorteilhafte Ausführungsvarianten der Erfindung werden mit den abhängigen Ansprüchen 2 bis 11 aufgezeigt.

Ein Verfahren mit den Merkmalen des Anspruches 12 ist erfindungsgemäß zur Herstellung von solchen Bodenbelägen vorgesehen. Die abhängigen Ansprüchen 13 bis 15 offenbaren Gestaltungsvarianten des Verfahrens.

Das Wesen der Erfindung ist zum einen, dass die Oberfläche eines solchen Bodenbelages aus wenigstens einer Steinplatte besteht, und zum anderen, dass die wenigstens eine Steinplatte integral mit der aus thermoplastischen Material und Kork bestehenden Tragschicht des Bodenbelages ist. Im Fall, dass ein Bodenbelag mehrere Steinplatten aufweist, sind die Steinplatten des Bodenbelages jeweils zueinander mit Abstand oder jeweils aneinander anliegend angeordnet.

Gemäß der Erfindung können weiterhin zusammen mit dem thermoplastischen Material und Kork auch die Steinplatten in eine betreffende Maschine zur Herstellung von thermoplastischen Bodenbelägen eingebracht werden. Durch die Erhitzung und dem Pressen der thermoplastischen Schicht mit Kork und den Steinplatten wird nicht nur das thermoplastische Material angeschmolzen, sondern das thermoplastische Material mit Kork benetzt auch die Unterseite der Steinplatten, wodurch das thermoplastische Material, der Kork und die wenigstens eine Steinplatte fest miteinander verbunden werden.

Unter Steinplatten sind im Rahmen der Erfindung sowohl keramische Platten (also gebrannte Platten, Steinzeug) oder aus Steinmehl hergestellte Platten oder Steinmehl bzw. Steingranulat enthaltende Platten, als auch kalibrierte Natursteinplatten zu verstehen. Unter kalibrierten Natursteinen sind Natursteine zu verstehen, die vorher auf eine definierte Dicke gebracht wurden. Als Beispiel für Naturstein - jedoch nicht einschränkend - werden hier Marmor, Sandstein, Granit oder Basalt genannt.

Bei dem Herstellungsprozess werden auf ein umlaufendes unteres Pressband der Herstellungsmaschine das thermoplastische Material und der Kork, vorzugsweise als Granulat aufgebracht und darauf werden die Steinplatten gelegt.

Das Auflegen der Steinplatten kann beispielsweise durch ein Handlingsystem erfolgen. Damit das Granulat und die Steinplatten gepresst werden können, ist im weiteren Herstellungsverlauf auch ein umlaufendes oberes Pressband vorhanden. Beide Pressbänder werden von paarweise angeordneten Pressplatten und/oder Presswalzen - die auf der dem zu pressenden Material abgewandten Seite der Pressbänder angeordnet sind - gedrückt.

Damit beim Pressen weder das den Steinplatten zugewandte Band, noch die Oberfläche der Steinplatten beschädigt werden, lässt man zwischen dem entsprechenden Pressband und der Oberfläche der Steinplatten ein dickenelastisches Band, eine Hilfsbahn mit hindurch laufen.

Der oben beschriebene Herstellungsprozess hat außerdem den Vorteil, dass dickere Steinplatten tiefer in den welchen Untergrund des thermoplastischen Materials gepresst werden, sodass die Summe aus beiden Schichten immer konstant bleibt. Der erfindungsgemäße Bodenbelag ist dann sozusagen in seiner Dicke kalibriert.

Nach einer weiteren Variante des erfindungsgemäßen Herstellungsverfahrens ist vorgesehen, dass der Druck auf die Pressplatten derart ist, dass auch in die Fugen zwischen den Steinplatten das thermoplastische Material hinein gepresst wird, wobei der Druck auf die Pressplatten derart gesteuert wird, dass das thermoplastische Material nicht über die Oberkanten der Steinplatten hinausgepresst wird.

Im Rahmen der Erfindung besteht der Untergrund unter den Steinplatten nicht nur aus thermoplastischem Material und Kork in einer Schicht.

Vorteilhafterweise können die Schichten auch aus Kunststoffen und weiteren Naturstoffen - wie Sisalfasern, Kokosfasern - bestehen. Die Kunststoffe können hierbei auch mit üblichen Zuschlagstoffen wie Gesteinsmehlen oder den erwähnten Naturstoffen bzw. -fasern gefüllt sein. Weiterhin ist es vorteilhaft, wenn der Bodenbelag - beispielsweise mittels Ruß oder Karbonfasern - elektrisch leitfähig ausgebildet ist. Eine elektrostatische Ableitung kann dann über eine der unteren elastischen Schichten oder über die Fugen erfolgen.

Gemäß der Erfindung kann man auch die Unterseite des erfindungsgemäßen Bodenbelages auch magnetisch ausbilden. Die magnetische Eigenschaft des Bodenbelages kann über Barium- oder Strontiumferrit-Einlagerungen mit anschließender Magnetisierung und einem eisenhaltigen Untergrund realisiert werden.

Weitere Ausgestaltungen der Erfindung werden nun beispielhaft anhand der Figuren näher erläutert. Es zeigen in schematischer Darstellung:
Fig. 1 einen Ausschnitt aus einer Ausgestaltung eines erfindungsgemäßen Bodenbelages, bei dem die Flanken der Steinplatten mit einem Überstand versehen sind;
Fig. 2 einen Ausschnitt eines Bodenbelages, bei dem die Flanken der Steinplatten mit keinem Überstand versehen sind;
Fig. 3 einen Ausschnitt eines Bodenbelages, bei dem die Flanken der Steinplatten nur teilweise mit einem Überstand versehen sind;
Fig. 4 einen Ausschnitt eines Bodenbelages, bei dem die Flanken der Steinplatten nicht parallel sind;
Fig. 5 einen Ausschnitt eines Bodenbelages, bei dem die Flanken der Steinplatten nicht parallel sind (andere Form, als bei Fig. 4);
Fig. 6 einen Ausschnitt des Bodenbelages, bei dem die Flanken der Steinplatten nachträglich mit einem Überstand versehen wurden;
Fig. 7 einen Ausschnitt des Bodenbelages, bei dem die Flanken der Steinplatten nachträglich mit einem Überstand versehen wurden und dieser Überstand profiliert ist;
Fig. 8 einen Ausschnitt eines Bodenbelages, bei dem die Flanken der Steinplatten nur teilweise mit einem Überstand versehen sind und die Fuge konvex verfugt ist.

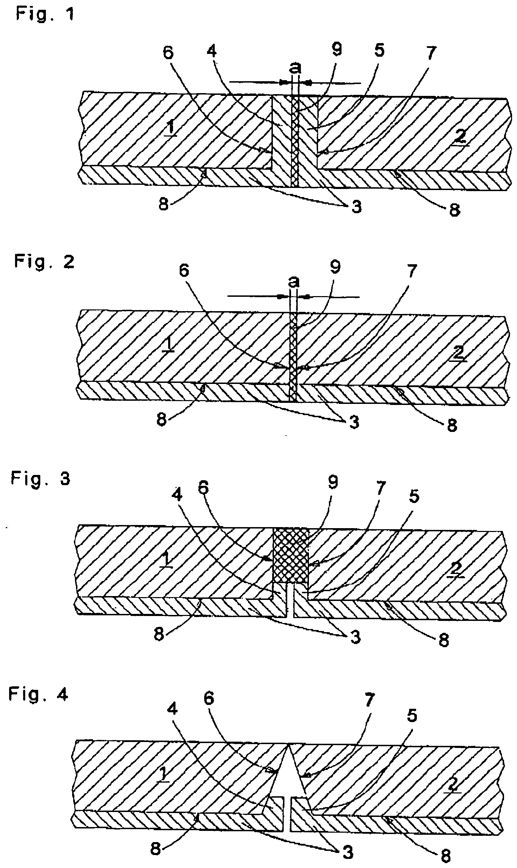

In der Fig. 1 wird ein vertikaler Schnitt durch den erfindungsgemäßen Bodenbelag gezeigt. Steinplatten 1, 2 liegen mit ihrer Unterseite 8 auf einem thermoplastischen Material und Kork 3 auf. An Flanken 6, 7 der Steinplatten 1, 2 befindet sich ebenfalls thermoplastisches/elastisches Material und Kork 3, welches sich bei der Herstellung des Bodenbelages, bei dem Pressen hier hochgeschoben hat, wodurch die Überstände 4, 5 entstehen.

Da der Bodenbelag nach seiner Fertigung auch in kleinere Platten zerlegt werden kann, entstehen beim Verlegen des Bodenbelages auf dem Fußboden gegebenenfalls Fugen 9.

Diese Fugen können aber auch aus ästhetischen Gründen mit Absicht gewählt werden. Die Fugenbreite kann hier zwischen 0 bis 4 mm betragen. Das Fugenmaterial kann dann entweder ebenfalls aus einem thermoplastischen Material oder aus einer selbstaushärtenden Fugendichtmasse oder aus einem mineralischen Material bestehen.

Um den Bodenbelag besser handhaben zu können - zum Beispiel beim Verlegen in Ecken, an Kanten oder Vorsprüngen des Bodens oder beim Legen von Mustern und Bildern -, muss er nach seiner Fertigung in kleinere Einheiten vereinzelt werden. Diese Einheiten können bis zur kleinsten Größe - der einer einzelnen Steinplatte - gefertigt werden. Bei kleinformatigen Steinplatten besteht die Möglichkeit, mehrere davon zusammenhängend auf eine elastische Unterlage als Verlegehilfe zu fixieren. Zum Zerteilen des Bodenbelages finden vorzugsweise oszillierende Messer Anwendung, die mittels Hochfrequenzschwingern angetrieben werden, Aber auch umlaufende Sägebänder oder Sägedrähte sind denkbar.

Die Fig. 2 unterscheidet sich zur Fig. 1 darin, dass hier keine Überstände 4, 5 vorhanden sind.

Da Steinplatten 1, 2 im Allgemeinen keine exakten Flanken 6, 7 aufweisen, sollten die Steinplatten 1, 2 verfugt werden. Die Fugenbreite ist hier kleiner als 4 mm anzunehmen.

In der Fig. 3 reichen die oberen Enden der Überstände 4, 5 nicht bis zur Oberkante der Steinplatten 1, 2. Dieses kann mit Absicht so gefertigt worden sein, um evtl. eine dekorative Fuge 9 anbringen zu können, oder aber auch aus dem Grunde, da das verwendete thermoplastische Material nicht ausreichend fließfähig sein könnte. Das obere Ende der Überstände würde dann in einem separatem Arbeitsgang abgeschnitten werden.

Mit der Fig. 4 wird eine andere Methode des Verlegens des Bodenbelages veranschaulicht. Hier sind die Flanken 6, 7 der Steinplatten 1, 2 in der Weise geneigt, dass die oberen Kanten der Steinplatten aneinander stoßen. Hier kann dann eine Fuge 9 entfallen. Im Rahmen dieser Ausgestaltung können die oberen Spitzen der Steinplatten 1, 2 in ihrem oberen Bereich auch parallel ausgestaltet sein.

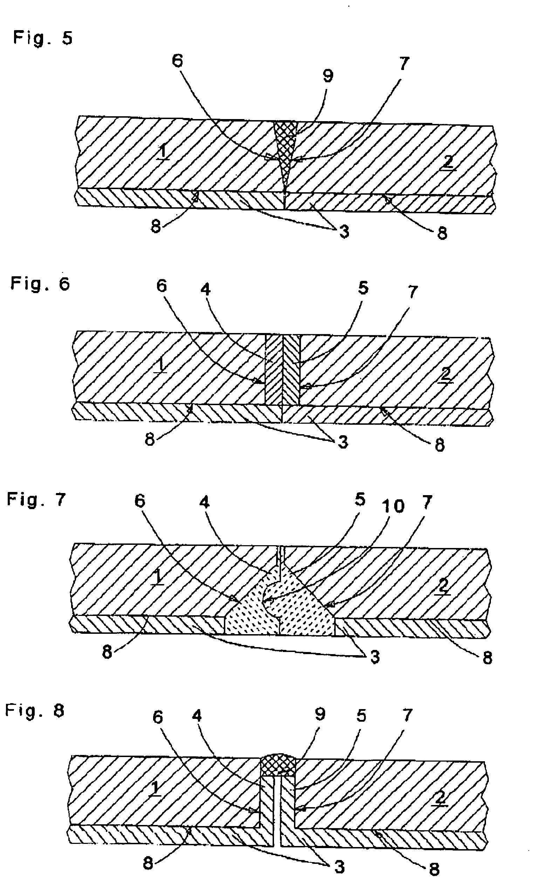

Im Gegensatz zur Fig. 4, erfolgt in der Fig. 5 die Neigung der Flanken in die andere Richtung. Auch gibt es hier keine Überstände 4, 5. Dadurch ist eine Fuge 9 erforderlich.

Im Gegensatz zur Fig. 1, sind in der Fig. 6 die Überstände 4, 5 in einem separaten Arbeitsgang, also nach dem Verbinden des thermoplastischen Materials und Kork 3 mit der Unterseite 8 der Steinplatten 1, 2, hergestellt worden. Die hier gezeigten Überstände 4, 5 können im Rahmen der Erfindung aber ebenfalls aus thermoplastischen, aber auch aus einem anderen Material bestehen. Ist eine entsprechende Fertigungsgenauigkeit vorhanden, so können dann die Steinplatten 1, 2 - falls gewollt - auch fugenlos verlegt werden.

Mit dem Ausführungsbeispiel nach der Fig. 7 soll gezeigt werden, wie nachträglich angebrachte Überstände 4, 5 derart gestaltet werden können, dass sie dem maßgenauen Verlegen dienen. Durch eine Profilierung 10 in den Steinplatten 1, 2 mit einer Positiv- bzw. Negativform werden die aneinander stoßenden Steinplatten 1, 2 zentriert und fixiert. Diese Profilierung 10 ist in der Fig. 7 als Halbkreis dargestellt. Die Profilierung 10 kann im Rahmen der vorliegenden Erfindung aber auch zickzackförmig oder auch als Nut-und-Feder-Verband ausgestaltet sein.

Die Fig. 8 ist der Fig. 3 ähnlich. Jedoch ist hier die Fuge 9 nicht so tief gehend. Ferner ist die Fuge 9 mit einer konvexen Wölbung versehen. Aus gestalterischen Gründen kann die Fuge 9 aber auch mit einer konkaven Wölbung versehen werden.

Diese Offenbarung bietet veranschaulichende erfindungsgemäße Ausführungsformen als Beispiel und nicht als Einschränkungen.

### Bezugszelchenliste

1 Steinplatte
2 Steinplatte
3 thermoplastisches Material
4 Überstand
5 Überstand
6 Flanke
7 Flanke
8 Unterseite
9 Fuge
10 Profilierung
a Abstand

## Patentansprüche

1. Bodenbelag bestehend aus:
- wenigstens einer Steinplatte (1, 2), die auf der Oberfläche des Bodenbelages angeordnet ist, wobei unter einer Steinplatte (1, 2) sowohl eine keramische Platte, eine aus Steinmehl hergestellte Platte oder eine Steinmehl bzw. Steingranulat enthaltende Platte, als auch eine kalibrierte Natursteinplatte, also ein Naturstein, der vorher auf eine definierte Dicke gebracht wurde, zu verstehen ist, und
- einer aus einem thermoplastischen Material und Kork bestehenden Tragschicht (3), die die Unterseite (8) der wenigstens einen Steinplatte (1, 2) benetzt und mit der wenigstens einen Steinplatte (1, 2) eine feste Verbindung hat.

2. Bodenbelag nach Anspruch 1, **dadurch gekennzeichnet, dass** mehrere Steinplatten (1, 2) auf einem zugeschnittenen Abschnitt des Bodenbelages (1, 2, 3) angeordnet sind.

3. Bodenbelag nach Anspruch 1 oder 2, **dadurch gekennzeichnet, dass** auch die Flanken (6, 7) der Steinplatten (1, 2) zumindest teilweise mit dem thermoplastischen Material (3) benetzt sind und dadurch einen so genannten Überstand (4, 5) bilden.

4. Bodenbelag nach Anspruch 1 oder 2, **dadurch gekennzeichnet, dass** auch die Flanken (6, 7) der Steinplatten (1, 2) zumindest teilweise mit einem thermoplastischen Material (9) benetzt sind und dadurch einen so genannten Überstand (4, 5) bilden, wobei sich dieses Material (9) von der Zusammensetzung her von dem thermoplastischen Material (3) unterhalb der Steinplatten (1, 2) unterscheidet.

5. Bodenbelag nach mindestens einem der Ansprüche 3 bis 4, **dadurch gekennzeichnet, dass** der Überstand (4, 5) In einem separaten Arbeitsgang, also nach dem Verbinden des thermoplastischen Materials (3) mit den Steinplatten (1, 2), an den Flanken (6, 7) der Steinplatten (1, 2) angebracht wird.

6. Bodenbelag nach mindestens einem der Ansprüche 3 bis 5, **dadurch gekennzeichnet, dass** der Überstand (4, 5) mit einer Profilierung (10) versehen, die derart gestaltet ist, dass sie in die Profilierung des Überstandes (4, 5) einer benachbarten Steinplatte (1, 2) im Wesentlichen spaltfrei eingreifen kann.

7. Bodenbelag nach Anspruch 6, **dadurch gekennzeichnet, dass** die Profilierung (10) halbkreisförmig oder zickzackförmig oder als Nut-Feder-Profilierung ausgestaltet ist.

8. Bodenbelag nach mindestens einem der Ansprüche 1 bis 7, **dadurch gekennzeichnet, dass** das thermoplastische Material (3) elektrisch leitfähig ausgebildet ist.

9. Bodenbelag nach mindestens einem der Ansprüche 1 bis 8, **dadurch gekennzeichnet, dass** eine elektrostatische Ableitung über die Fugen zwischen den Steinplatten (1, 2) erfolgt.

10. Bodenbelag nach mindestens einem der Ansprüche 1 bis 9, **dadurch gekennzeichnet, dass** die aus einem thermoplastischen Material und Kork bestehende Tragschicht (3) selbsthaftend ausgebildet ist.

11. Bodenbelag nach mindestens einem der Ansprüche 1 bis 10, **dadurch gekennzeichnet, dass** die aus einem thermoplastischen Material und Kork bestehende Tragschicht (3) magnetisch ausgebildet ist.

12. Verfahren zur Herstellung eines Bodenbelages (1, 2, 3) nach einem der Ansprüche 1 bis 11, bei dem in einer Doppelbandpresse:
- auf ein umlaufendes unteres Band zunächst ein Bestandteil des Bodenbelages, vorzugsweise die spätere Tragschicht (3) aus thermoplastischem Material und Kork, und darauf ein weiterer Bestandteil des Bodenbelages, die Steinplatten (1, 2), gleichmäßig aufgelegt werden,
- im weiteren Herstellungsablauf ein umlaufendes oberes Band auf das Ausgangsmaterial drückt,
- in dem Förderspalt zwischen den beiden Bändern der Doppelbandpresse die Ausgangsmaterialien (1, 2, 3) mittels einer Heizung angewärmt oder angeschmolzen und miteinander verpresst werden, wobei das Pressen über paarweise auf der dem zu pressenden Material abgewandten Seite der Bänder angeordneten Pressplatten und/oder Presswalzen erfolgt, so dass jede Steinplatte (1, 2), jeweils als Abschnitt der Oberfläche des Bodenbelages integral mit der aus thermoplastischem Material und Kork bestehenden Tragschicht (3) des Bodenbelages ist und zumindest die Unterseite jeder Steinplatte (1, 2) von der Tragschicht (3) benetzt ist,
- anschließend eine Kühlung des so entstandenen Bodenbelages (1, 2, 3) erfolgt, und
- der Bodenbelag (1, 2 3) dann entweder plattenförmig oder bahnförmig abgelängt wird.

13. Verfahren nach Anspruch 12, **dadurch gekennzeichnet, dass** auf das umlaufende untere Band zunächst die Steinplatten (1, 2) und dann das thermoplastisch verformbare Material und der Kork aufgelegt werden.

14. Verfahren nach Anspruch 12 oder 13, **dadurch gekennzeichnet, dass** vor Eintritt der auf das untere Band aufgelegten Ausgangsmaterialien in den Förderspalt zwischen der Oberfläche der Steinplatten (1, 2) und dem entsprechenden Band ein dickenelastisches Hilfsband angeordnet wird, welches durch den Förderspalt mit hindurch läuft.

15. Verfahren nach Anspruch 12, **dadurch gekennzeichnet, dass** der Druck auf die Pressplatten derart erhöht wird, dass auch in die Fugen (9) zwischen den Steinplatten (1, 2) das thermoplastische Material und der Kork hineingepresst werden.

## Claims

1. A floor covering comprising:
- at least one stone plate (1, 2) arranged on the surface of the floor covering, wherein a stone plate (1, 2) is understood to include a ceramic plate, a plate made of stone powder or a plate containing stone powder and granulated stone material, respectively, and a calibrated natural stone plate, i.e. a natural stone, which has previously been brought to a defined thickness, and
- a base layer (3) composed of a thermoplastic material and cork, which base layer covers the lower side (8) of the at least one stone plate (1, 2) and has a permanent joint with the at least one stone plate (1, 2).

2. The floor covering according to claim 1, **characterized in that** a plurality of stone plates (1, 2) are arranged on a cut to size section of the floor covering (1, 2, 3).

3. The floor covering according to claim 1 or 2, **characterized in that** also the edges (6, 7) of the stone plates (1, 2) are at least partially covered with the thermoplastic material (3), thereby forming a so-called protrusion (4, 5).

4. The floor covering according to claim 1 or 2, **characterized in that** also the edges (6, 7) of the stone plates (1, 2) are at least partially covered with a thermoplastic material (9), thereby forming a so-called protrusion (4, 5), wherein said material (9) differs in its composition from the thermoplastic material (3) below the stone plates (1, 2).

5. The floor covering according to at least one of claims 3 to 4, **characterized in that** the protrusion (4, 5) is attached to the edges (6, 7) of the stone plates (1, 2) in a separate work step, i.e. after joining the thermoplastic material (3) with the stone plates (1, 2).

6. The floor covering according to at least one of claims 3 to 5, **characterized in that** the protrusion (4, 5) is provided with a profiling (10), which is formed such that that it can engage with an adjacent stone plate (1, 2) in a substantially gap-free manner.

7. The floor covering according to claim 6, **characterized in that** the profiling (10) is formed in a semi-circular or zigzag shape or as a tongue-and-groove profiling.

8. The floor covering according to at least one of claims 1 to 7, **characterized in that** the thermoplastic material (3) is electrically conductive.

9. The floor covering according to at least one of claims 1 to 8, **characterized in that** an electrostatic discharge is effected via the joints between the stone plates (1, 2).

10. The floor covering according to at least one of claims 1 to 9, **characterized in that** the base layer (3) composed of a thermoplastic material and cork is self-adhesive.

11. The floor covering according to at least one of claims 1 to 10, **characterized in that** the base layer (3) composed of a thermoplastic material and cork is magnetic.

12. A method for manufacturing a floor covering (1, 2, 3) according to one of claims 1 to 11, wherein in a double-belt press:
- first of all a component of the floor covering, preferably the base layer (3) made of thermoplastic material and cork and, thereabove, a further component of the floor covering, i.e. the stone plates (1, 2), are evenly placed on a circulating lower belt,
- in a further manufacturing process a circulating upper belt presses the starting material,
- in the conveying gap between the two belts of the double-belt press, the starting materials (1, 2, 3) are heated or melted by means of a heater and pressed together, wherein pressing is effected by means of press plates and/or press rolls which are arranged in pairs on the side of the belts facing away from the material to be pressed, such that each stone plate (1, 2) as a section of the floor covering surface is formed integrally with the base layer (3) of the floor covering, which base layer is made of thermoplastic material and cork, and such that at least the lower side of each stone plate (1, 2) is covered by the base layer (3),
- subsequently, cooling of the manufactured floor covering (1, 2, 3) is effected, and
- the floor covering (1, 2, 3) is then either cut into plates or cut into sheets.

13. The method according to claim 12, **characterized in that**, first, the stone plates (1, 2) and, thereafter, the thermoplastic deformable material and the cork material are placed on the circulating lower belt.

14. The method according to claim 12 or 13, **characterized in that**, before the starting materials placed on the lower belt enter the conveying gap, an auxiliary belt which shows elasticity in its thickness direction and which also passes through the conveying gap, is arranged between the surface of the stone plates (1, 2) and the corresponding belt.

15. The method according to claim 12, **characterized in that** the pressure on the press plates is increased such that the thermoplastic material and the cork are also pressed into the joints (9) between the stone plates (1, 2).

## Revendications

1. Revêtement de sol constitué :
- d'au moins une dalle (1, 2), qui est agencée sur la surface du revêtement de sol, dans lequel on entend par dalle (1, 2) aussi bien une plaque céramique, une plaque fabriquée à partir de poudre de pierre ou une plaque contenant de la poudre de pierre ou du granulat de pierre, qu'une dalle naturelle calibrée, c'est-à-dire une pierre naturelle, qui a été mise préalablement à une épaisseur définie, et
- d'une couche porteuse (3), qui est constituée d'une matière thermoplastique et de liège, qui imprègne le dessous (8) de la au moins une dalle (1, 2) et qui a une liaison solide avec la au moins une dalle (1, 2).

2. Revêtement de sol selon la revendication 1, **caractérisé en ce que** plusieurs dalles (1, 2) sont agencées sur une section, coupée aux dimensions, du revêtement de sol (1, 2, 3).

3. Revêtement de sol selon la revendication 1 ou 2, **caractérisé en ce que** les flancs (6, 7) des dalles (1, 2) sont aussi au moins en partie imprégnés avec la matière thermoplastique (3) et forment ainsi ce que l'on appelle un débord (4, 5).

4. Revêtement de sol selon la revendication 1 ou 2, **caractérisé en ce que** les flancs (6, 7) des dalles (1, 2) sont aussi au moins en partie imprégnés avec une matière thermoplastique (9) et forment ainsi ce que l'on appelle un débord (4, 5), cette matière (9) étant différente, par sa composition, de la matière thermoplastique (3) au-dessous des dalles (1, 2).

5. Revêtement de sol selon au moins l'une quelconque des revendications 3 à 4, **caractérisé en ce que** le débord (4, 5) est ménagé sur les flancs (6, 7) des dalles (1, 2) lors d'une opération séparée, donc après la liaison de la matière thermoplastique (3) avec les dalles (1, 2).

6. Revêtement de sol selon au moins l'une quelconque des revendications 3 à 5, **caractérisé en ce que** le débord (4, 5) est muni d'un profilage (10) qui est façonné de telle sorte qu'il puisse s'imbriquer sensiblement sans jeu dans le profilage du débord (4, 5) d'une dalle voisine (1, 2).

7. Revêtement de sol selon la revendication 6, **caractérisé en ce que** le profilage (10) est réalisé en forme de demi-cercle ou en forme de zigzag ou comme un profilage par rainure et languette.

8. Revêtement de sol selon au moins l'une quelconque des revendications 1 à 7, **caractérisé en ce que** la matière thermoplastique (3) est électroconductrice.

9. Revêtement de sol selon au moins l'une quelconque des revendications 1 à 8, **caractérisé en ce qu'**une dérivation électrostatique s'effectue par l'intermédiaire des joints entre les dalles (1, 2).

10. Revêtement de sol selon au moins l'une quelconque des revendications 1 à 9, **caractérisé en ce que** la couche porteuse (3) constituée d'une matière thermoplastique et de liège est autocollante.

11. Revêtement de sol selon au moins l'une quelconque des revendications 1 à 10, **caractérisé en ce que** la couche porteuse (3) constituée d'une matière thermoplastique et de liège est magnétique.

12. Procédé de fabrication d'un revêtement de sol (1, 2, 3) selon l'une quelconque des revendications 1 à 11, dans lequel, dans une presse à double bande,
- on pose de manière régulière sur une bande inférieure tournante d'abord un constituant du revêtement de sol, de préférence la future couche porteuse (3) en matière thermoplastique et en liège, et par-dessus un autre constituant du revêtement de sol, les dalles (1, 2),
- on presse dans la suite du processus de fabrication une bande supérieure tournante sur le matériau de départ,
- dans la fente de transport entre les deux bandes de la presse à double bande, on fait chauffer ou fondre les matériaux de départ (1, 2, 3) au moyen d'un chauffage et on les presse ensemble, la pression étant réalisée par l'intermédiaire de plaques de presse et/ou de cylindres de presse agencés par paire sur le côté des bandes opposé au matériau à presser de telle sorte que chaque dalle (1, 2), à chaque fois en tant que section de la surface du revêtement de sol, soit liée d'un seul tenant à la couche porteuse (3) constituée de matière thermoplastique et de liège et qu'au moins le dessous de chaque dalle (1, 2) soit imprégné par la couche porteuse (3),
- puis il se produit un refroidissement du revêtement de sol (1, 2, 3) ainsi créé, et
- on coupe ensuite aux dimensions le revêtement de sol (1, 2, 3) sous forme de plaque ou de bande.

13. Procédé selon la revendication 12, **caractérisé en ce qu'**on pose sur la bande inférieure tournante d'abord les dalles (1, 2) et ensuite la matière thermoplastique déformable et le liège.

14. Procédé selon la revendication 12 ou 13, **caractérisé en ce que**, avant l'entrée des matériaux de départ posés sur la bande inférieure, une bande auxiliaire élastique en épaisseur, qui passe à travers la fente de transport, est agencée dans la fente de transport entre la surface des dalles (1, 2) et la bande correspondante.

15. Procédé selon la revendication 12, **caractérisé en ce que** la pression sur les plaques de presse est augmentée de telle sorte que la matière thermoplastique et le liège soient aussi pressés dans les joints (9) entre les dalles (1, 2).
